Europäisches Patentamt

European Patent Office

Office européen des brevets

(19)

(11) Veröffentlichungsnummer: **0 174 925**
**B1**

(12) # EUROPÄISCHE PATENTSCHRIFT

(45) Veröffentlichungstag der Patentschrift :
06.05.87

(51) Int. Cl.⁴ : **B 65 G 63/04, B 60 L 11/18**

(21) Anmeldenummer : **85890219.0**

(22) Anmeldetag : **10.09.85**

(54) Umschlaganlage zum Beladen und Entladen der Waggons von Güterzügen.

(30) Priorität : **12.09.84 AT 2913/84**

(43) Veröffentlichungstag der Anmeldung :
**19.03.86 Patentblatt 86/12**

(45) Bekanntmachung des Hinweises auf die Patenterteilung : **06.05.87 Patentblatt 87/19**

(84) Benannte Vertragsstaaten :
**AT BE DE FR IT LU NL**

(56) Entgegenhaltungen :
**DD-A- 103 427**
**DE-A- 1 945 196**
**DE-A- 3 136 687**
**DE-C- 551 173**
**DE-C- 877 913**
**US-A- 2 589 453**

(73) Patentinhaber : **Kortschak, Bernd, DDr.**
**Chimanistrasse 19**
**A-1190 Wien (AT)**

(72) Erfinder : **Kortschak, Bernd, DDr.**
**Chimanistrasse 19**
**A-1190 Wien (AT)**

(74) Vertreter : **Atzwanger, Richard Dipl.Ing.**
**Patentanwälte Dipl.-Ing. Anton Atzwanger, Dipl.-Ing.**
**Richard Atzwanger Mariahilfer Strasse 1c**
**A-1060 Wien (AT)**

**Beschreibung**

Die Erfindung betrifft eine Umschlaganlage zum Beladen und Entladen der Waggons von Güterzügen mit in Transportgefäßen befindlichen Gütern, welche Anlage sich in einer mittels eines Oberleitungsdrahtes elektrifizierten Eisenbahnstrecke befindet, mit mindestens einer längsverfahrbaren Umschlageinrichtung, durch welche mindestens ein Geleise und eine Fahrspur für Transportfahrzeuge oder mindestens zwei Geleise bedienbar sind.

Eine derartige Umschlaganlage ist in der DE-A-3 136 687 beschrieben.

Für das Beladen der Waggons von Güterzügen in einer Umschlaganlage für in Transportgefäßen befindliche Güter ist bislang ein von elektrifizierten Streckengeleise gesondertes, nicht elektrifiziertes, zusätzliches Geleise erforderlich, dem Umschlageinrichtungen, wie z. B. mindestens eine Krananlage, zugeordnet sind. Für die Beladung bzw. Entladung der Waggons müssen die Waggons der Güterzüge mittels nicht elektrischer Verschublokomotiven auf dieses mindestens eine zusätzliche Ladegeleise verstellt werden, wo sie mitels der Umschlageinrichtung mit den Transportgefäßen beladen oder von diesen entladen werden können.

Diese bekannte Anordnung ist insoferne nachteilig, als mindestens ein zusätzliches Geleise erforderlich ist, wodurch ein erhöter Platzbedarf bedingt wird, als weiters durch die Verschubvorgänge durch das Ankuppeln von Verschublokomotiven ein erhöter Zeitaufwand und ein erhöter Manipulationsaufwand bedingt wird und als schließlich durch diese jeweils nur die Waggons derjenigen Züge bedient werden können, die sich auf dem mindestens einen zusätzlichen Ladegeleise im wirkungsbereich der Umschlageinrichtung befinden.

Das mindestens eine zusätzliche, nicht elektrifizierte Ladegeleise ist deshalb erforderlich, da ein Oberleitungsdraht die Beladung der Waggons durch die Umschlageinrichtung verhindern bzw. stark behindern würde. Um somit die Waggons von Güterzügen in den Bereich der Umschlaganlage zu bringen, müssen diese mittels gesonderter Verschublokomotiven aus dem elektrifizierten Streckenbereich auf dem nicht elektrifizierten, zusätzlichen Ladegeleise in den Bereich der Umschlaganlage verschoben werden. Hierauf können sie mittels der Umschlageinrichtungen beladen bzw. entladen werden. Als Umschlageinrichtungen sind insbesondere Portalkräne im Einsatz, durch welche auf nebeneinander liegenden Geleisen befindliche Waggons von Güterzügen beladen bzw. entladen werden können. Hierbei können Umladungen zwischen Straßenfahrzeugen und Güterwaggons oder zwischen Güterwaggons selbst erfolgen.

Der Erfindung liegt die Erkenntnis zugrunde, daß die Bewegung von Zügen über Strecken, deren Länge etwa der Länge von Umschlaganlagen entspricht, also in der Länge von einigen 100 m, auch durch die diesen innewohnende kinetische Energie bewirkt werden kann. Der Erfindung liegt die Aufgabe zugrunde, unter Zugrundelegung dieser Erkenntnis eine Umschlaganlage für Güter zu schaffen, durch welche die vorstehend erläuterten, den bekannten Anlagen anhaftenden Nachteile vermieden werden.

Dies wird erfindungsgemäß dadurch erzielt, daß der Oberleitungsdraht bis zum Bereich der Verfahrbarkeit der Umschlageinrichtung vorgesehen ist, wogegen er innerhalb des Bereiches der Verfahrbarkeit der Umschlageinrichtung unterbrochen ist. In diesem Bereich erfolgt die Bewegung der Güterzüge durch die diesen innewohnende kinetische Energie aufgrund der Fahrt durch den vor diesem Bereich liegenden elektrifizierten Teil der Strecke. Demnach werden Güterzüge in diesen Bereich so weit eingefahren, daß die elektrolokomotive diesen Bereich durchfährt und wieder in den mit einer Oberleitung versehenen elektrifizierten Bereich gelangt, wogegen sich die Wagons des Güterzüges in demjenigen Bereich befinden, in dem kein Oberleitungsdraht vorgesehen ist und der sich im Wirkungsbereich der Umschlageinrichtung befindet.

Vorzugsweise ist der Bereich der Verfahrbarkeit der Umschlageinrichtung durch Endanschläge, z. B. Prellböcke od. dgl., begrenzt. Nach einem anderen bevorzugten Merkmal ist der Bereich der Verfahrbarkeit der Umschlageinrichtung durch Lichtschranken begrenzt. Schließlich sind vorzugsweise weitere Signaleinrichtungen, insbesondere elektro-optische Signaleinrichtungen, vorgesehen, durch die die zugeordneten Geleise nur dann für die Durchfahrt eines Zuges freigegeben werden, wenn von der Umschlageinrichtung das für die Durchfahrt erforderliche lichte Profil freigegeben ist. Wenn dies hingegen nicht gewährleistet ist, werden durch diese Signaleinrichtungen die betreffenden Geleise für ein Befahren blockiert.

Der Gegenstand der Erfindung ist nachtehend anhand eines in der Zeichnung dargestellten Ausführungsbeispieles näher erläutert. Es zeigen :

Figur 1 die Draufsicht auf eine erfindungsgemäße Umschlaganlage,

Figur 2 einen Schnitt nach der Linie II-II der Fig. 1 und

Figur 3 einen Schnitt nach der Linie III-III der Fig. 1.

Wie aus der Zeichnung erkennbar ist, befindet sich eine anmeldungsgemäße Umschlaganlage zum Beladen und Entladen der Waggons von Güterzügen im Bereich einer Bahnstrecke mit vier Geleisen 1, die unter Verwendung von Oberleitungsdrähten 2 elektrifiziert sind. Die Oberleitungsdrähte 2 sind jedoch im Bereich der Umschlaganlage selbst unterbrochen. Zur Beförderung der Güter im Bereich der Umschlaganlage ist ein Portalkran 10 vorgesehen, der die vier Geleise 1 überbrückt und der auf parallel zu den Geleisen 1 verlaufenden Schienen 11 über den Bereich der Umschlaganlage verfahrbr ist. Mittels dieses Portalkranes 10 können Güter von neben den Geleisen 1 abgestellten Transportfahrzeugen auf Waggons bzw. von Waggons auf Transportfahrzeuge und schließlich zwischen den einzelnen Waggons umgeladen werden.

Zur Begrenzung der Verfahrbarkeit des Portalkranes 10 können mechanische Anschläge, wie Prellböcke, vorgesehen sein. Alternativ bzw. ergänzend hiezu können hierfür elektro-optische Signaleinrichtungen vorgesehen sein, die durch in den Endbereichen der Umschlaganlage angeordnete Lichtgeber 5 und diesen zugeordnete Lichtempfänger 6 gebildet sein können, durch die die Verstellbewegung des Portalkranes 10 gesteuert wird. Um weiters ausschließen zu können, daß ein Geleise 1 befahren wird, das durch ein vom Portalkran 10 transportiertes Transportgefäß blockiert ist, sind weiters den einzelnen Geleisen 1 insbesondere elektro-optische Signaleinrichtungen 7, 8 zugeordnet, durch welche die für die Befahrbarkeit der Geleise 1 erforderlichen lichten Profile überwacht werden und durch welche die Geleise 1 dann blockiert werden. wenn diese lichten Profile nicht gegeben sind.

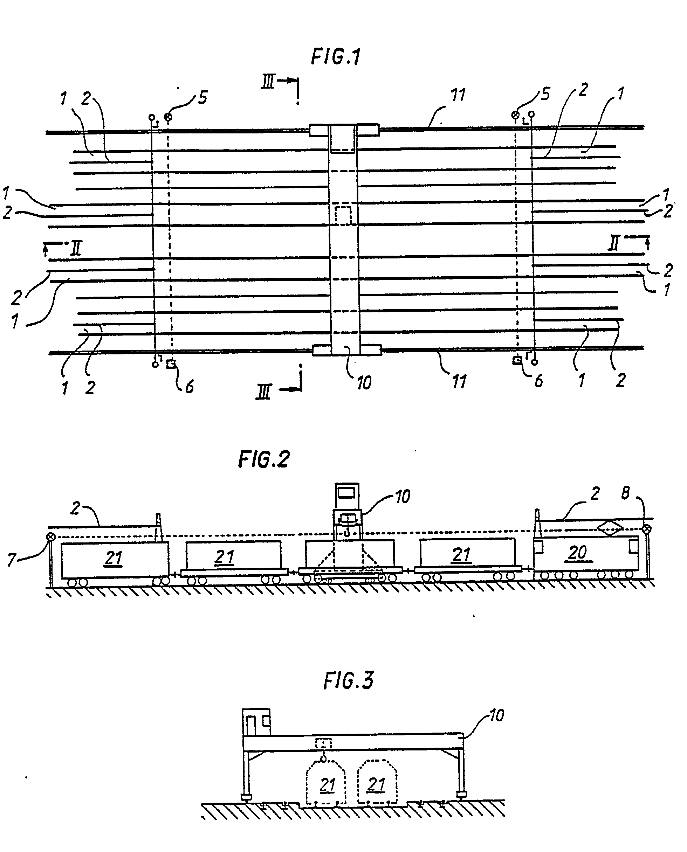

Bei einer derartigen Umschlaganlage werden die Güterzüge im elektrifizierten Bereich durch die Elektrolokomotiven 20 gezogen. Durch die ihnen innewohnende kinematische Energie durchfahren die Züge den nicht elektrifizierten Bereich und werden in einer Lage zum Stehen gebracht, in welcher sich die Elektrolokomotive 20 wieder im elektrifizierten Bereich befindet. Eine derartige Lage eines Güterzüge ist in Fig. 2 der Zeichnung dargestellt. Da sich dabei die Waggons 21 in demjenigen Bereich der Umschlaganlage, in dem kein Oberleitungsdraht 2 vorgesehen ist, befinden, können sie ohne jegliche Behinderung durch den die Geleise 1 überspannenden und längs dieser verfahrbaren Portalkran 10 mit Transportgefäßen beladen bzw. entladen werden. Nach Durchführung der Umschlagarbeiten wird der Zug mittels der Elektrolokomotive 20 aus dem Bereich der Umschlaganlage verfahren.

Wie aus den vorliegenden Darlegungen verständlich ist, werden durch eine efindungsgemäße Umschlaganlage Einsparungen an Platz erzielt, da keine gesonderten Umschlaggeleise vorgesehen zu sein brauchen. Zudem werden insbesondere Einsparungen im Transport — bzw. Manipulationsaufwand erzielt, da kein Erfordernis besteht, die Güterzüge mittels gesonderter Verschublokomotiven auf gesonderte Geleise der Umschlaganlage zu verfahren, da die Beladung mit Gütern bzw. die Entladung der Güter selbst im Bereich der eigentlichen Fahrstrecke vorgenommen werden kann. Aufgrund der hohen Manipulationsgeschwindigkeit, die mittels moderner Krananlagen erzielbar ist, wird hiedurch keine Behinderung im Zugverkehr bedingt. Soferne eine solche Behinderung zu befürchten ist, kann eine erfindungsgemäße Umschlaganlage im Bereich eines sogenannten Bypasses vorgesehen sein, wobei die vorstehend angeführten Vorteile in der gleichen Weise erzielt werden.

Ergänzend wird darauf verwiesen, daß die Erfindung auch bei einem sogenannten Stockgeleise zur Anwendung gebracht werden kann. Dabei fährt der Zug in den nicht elektrifizierten Bereich der Umschlaganlage ein. Während des Umschlagvorganges kann an den hintersten Waggon eine Verschublokomotive angekuppelt werden, durch welche der Gütezug nach Beengigung der Ladevorgänge in der entgegengesetzten Richtung wieder aus dem Stockgeleise herausgezogen werden kann.

Wenngleich hierbei aufgrund der erforderlichen Kupplungsarbeiten ein etwas erhöhter Manipulationsaufwand bedingt wird, werden auch hierbei Vorteile und Einsparungen erzielt, da der Güterzug in die Umschlaganlage verfahren werden kann, ohne daß hierfür eine Verschublokomotive angekuppelt zu werden braucht. Eine solche wird vielmehr erst während der Ladevorgänge angekuppelt, wodurch keine Verzögungerungen bedingt werden.

## Patentansprüche

1. Umschlaganlage zum Beladen und Entladen der Waggons von Güterzügen mit in Transportgefäßen befindlichen Gütern, welche Anlage sich im Bereich einer mittels eines Oberleitungsdrahtes elektrifizierten Eisenbahnstrecke befindet, mit mindestens einer längsverfahrbaren Umschlageinrichtung, durch welche mindestens ein Geleise und eine Fahrspur für Transportfahrzeuge oder mindestens zwei Geleise bedienbar sind, dadurch gekennzeichnet, daß der Oberleitungsdraht (2) bis zum Bereich der Verfahrbarkeit der Umschlageinrichtung (10) vorgesehen ist, wogegen er innerhalb des Bereiches der Verfahrbarkeit der Umschlageinrichtung (10) unterbrochen ist.

2. Anlage nach Anspruch 1, dadurch gekennzeichnet, daß der Bereich der Verfahrbarkeit der Umschlageinrichtung (10) durch Endanschläge, z. B. Prellböcke, begrenzt ist.

3. Anlage nach einem der Ansprüche 1 oder 2, dadurch gekennzeichnet, daß der Bereich der Verfahrbarkeit der Umschlageinrichtung (10) durch Lichtschranken (5, 6) begrenzt ist.

4. Anlage nach einem der Ansprüche 1 bis 3, dadurch gekennzeichnet, daß in Längsrichtung des mindestens einen Geleises (1) Signaleinrichtungen (7, 8) vorgesehen sind, durch welche das für die Befahrbarkeit der Geleise (1) durch Züge erforderliche lichte Profil überwachbar ist. also das zugeordnete Geleise (1) freigegeben bzw. blockiert wird.

## Claims

1. A handling installation for loading and unloading goods train wagons with goods located in transport containers, which installation is situated in the region of a section of railway line electrified by means of an overhead wire and comprises at least one longitudinally displaceable handling apparatus by means of which at least one line and one roadway for transporting vehicles or at least two lines can be served, characterized in that the overhead wire (2) is provided as far as the region over which the handling apparatus (10) can be displaced, while it is interrupted inside the region over which the handling apparatus (10) can be displaced.

2. An installation according to claim 1, characterized in that the region over which the handling apparatus (10) can be displaced is defined by end stops, e. g. buffer stops.

3. An installation according to claim 1 or claim 2, characterized in that the region over which the handling apparatus (10) can be displaced is defined by light barriers (5, 6).

4. An installation according to any one of claims 1 to 3, characterized in that in the longitudinal direction of the line or lines (1) where are provided signal devices (7, 8) by means of which the clear section necessary for the lines (1) to be usable by trains can be controlled, i. e. the allocated line (1) is released or blocked.

**Revendications**

1. Installation de transbordement pour le chargement et le déchargement des wagons de trains de marchandises avec marchandises transportées en conteneurs, cette installation se trouvant dans la zone d'une ligne ferroviaire électrifiée au moyen d'un câble conducteur aérien, avec au moins un dispositif de transbordement pouvant se déplacer longitudinalement, à travers lequel sont desservies au moins une voie ferrée et une piste pour véhicules transporteurs ou au moins deux voies ferrées, caractérisée en ce que le câble conducteur aérien (2) est prévu jusqu'à la zone de déplacement du dispositif de transbordement (10) mais par contre est interrompu à l'intérieur de la zone que peut parcourir le dispositif de transbordement (10).

2. Installation selon la revendication 1, caractérisé en ce que la zone que peut parcourir le dispositif de transbordement (10) est limitée par des butées d'extrémité, par exemple par des butoirs.

3. Installation selon l'une des revendications 1 ou 2, caractérisée en ce que la zone de parcours du dispositif de transbordement (10) est limitée par des barrières de lumière (5, 6).

4. Installation selon l'une des revendications 1 à 3, caractérisée en ce que dans la direction longitudinale d'au moins une voie ferrée (1) sont prévus des dispositifs de signalisation (7, 8) par lesquels le profil libre nécessaire pour le parcours des trains sur la voie (1) peut être surveillé en indiquant que la voie (1) est libre ou bloquée.

FIG.1

FIG.2

FIG.3